# EUROPEAN PATENT APPLICATION

(11) **EP 1 947 871 A1**
(43) Date of publication of application: **23.07.2008**
(21) Application number: 07023751.6
(22) Date of filing: 07.12.2007
(51) Int. Cl.: H04Q 7/30

(54) **Method and apparatus for reordering of packets in PDCP layer of a wireless communications system**

(30) Priority: 08.12.2006 US 869115 P
(71) Applicant: Innovative Sonic Limited, Tortola (VG)
(72) Inventor: Jiang, Sam Shiawa-Shiang, Taipei City Taiwan (TW)
(74) Representative: Hager, Thomas Johannes

(57) **Abstract**

A method for handling reordering in a Packet Data Convergence Protocol layer of a wireless communications system includes receiving a sequence of packets (302), performing a reordering function for the sequence of packets (304), and performing a deciphering function for the sequence of packets after the reordering function is performed (306).

## Description

This application claims the benefit of U.S. Provisional Application No. 60/869, 115, filed on Dec 8, 2006 and entitled "Out-of-sequence delivery for deciphering and header decompression", the contents of which are incorporated herein by reference.

The present invention relates to a method and apparatus for handling reordering in a wireless communications system according to the pre-characterizing clauses of claims 1 and 4.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. However, due to demand for high-speed and multimedia applications, the next generation mobile telecommunications technology and related communication protocols have been developed.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simple.

Take an LTE-related specification established by the 3GPP for example, the main functions of an RLC (Radio Link Control) layer include in-sequence delivery of upper layer PDUs (Protocol Data Units) except at HO (Handover) in the uplink, and the main functions of a PDCP (Packet Data Convergence Protocol) layer include in-sequence delivery of upper layer PDUs at HO in the uplink. "In-sequence delivery" means that packets are delivered to upper layer at the receiver in the order of generating the packets at the transmitter, and the order of generating the packets is determined according to sequence numbers (SNs) of the packets. In other words, the RLC layer should perform reordering to recovery the order of the packets, so as to deliver PDUs in sequence. In such a situation, there may be two possible implementations: (1) the RLC layer performs reordering while the PDCP layer does not; or, (2) Both the PDCP and RLC layers perform reordering.

The requirement of in-sequence delivery in PDCP is induced by the situation that the PDCP can use a header de-/compressing technique, such as ROHC (Robust Header Compression) algorithm, to de-/compress packet headers. In order to accurately decompress packet headers, the PDCP layer must ensure that packets arrive a header decompression entity in the order of PDCP SNs.

Except de-/compression operations, PDCP can perform ciphering protection for the packets, in order to protect user data and signaling information from being intercepted by unauthorized devices. Generally, in the prior art ciphering method, the transmitter generates keystream data via a specified algorithm based on ciphering key (CK), ciphering sequence number (SN), and other parameters or variables, and encrypts plain-text data with the keystream data to generate cipher-text data. The receiver can decipher the cipher-text data by inverse operations. The ciphering SN is composed of a Hyper Frame Number (HFN), maintained in both the transmitter and the receiver, and a SN, embedded in a header of a packet. HFN is similar to a carrying number of SN. Each time SN wraps around its maximum representing value back to 0, HFN is incremented by one in the transmitter and in the receiver. For example, if SN is represented by 7 bits, which counts from 0 to 127, once SN is beyond 127, HFN is incremented by 1, and SN restarts from 0. As a result, according to SN, the sender and the receiver can timely increment HFN, so as to keep synchronization of HFN and maintain ciphering and deciphering processes.

Since HFN is similar to a carrying number of SN, if packets do not arrive the receiver in the order of their SNs, HFN may be wrongly accumulated leading to HFN out of synchronization, causing deciphering failure. In other words, before performing deciphering, the PDCP layer must ensure that the order of packets is the same as the order of generating the packets. However, the prior art does not specify the sequence of performing deciphering and performing reordering, and may cause deciphering failure.

This in mind, the present invention aims at providing a method and apparatus for handling reordering in a wireless communications system, for preventing deciphering failure, so as to enhance transmission efficiency.

This is achieved by a method and apparatus for handling reordering in a wireless communications system according to claims 1 and 4. The dependent claims pertain to corresponding further developments and improvements.

As will be seen more clearly from the detailed description following below, the claimed method for handling reordering in a Packet Data Convergence Protocol layer of a wireless communications system comprises receiving a sequence of packets, performing a reordering function for the sequence of packets, and performing a deciphering function for the sequence of packets after the reordering function is performed.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 is a flowchart of a process according to an embodiment of the present invention.
Fig. 4 is a schematic diagram of the sequence of packet processing according to the process shown in Fig. 3.

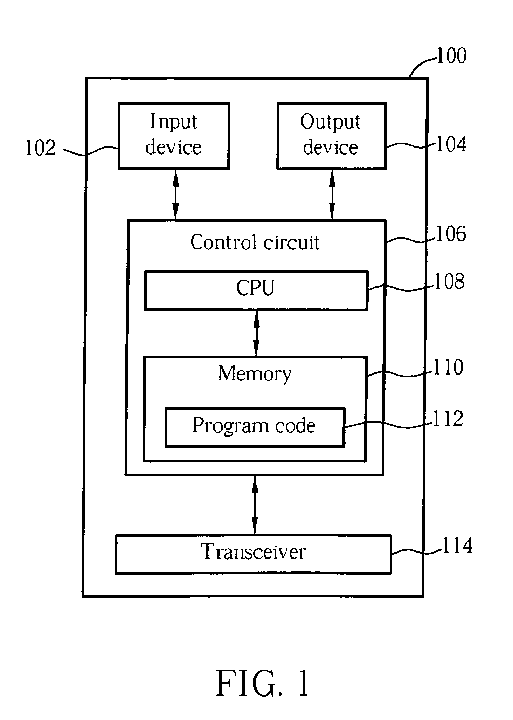

Please refer to Fig. 1, which is a functional block diagram of a communications device 100 in a wireless communications system. The wireless communications system is preferably the LTE system. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

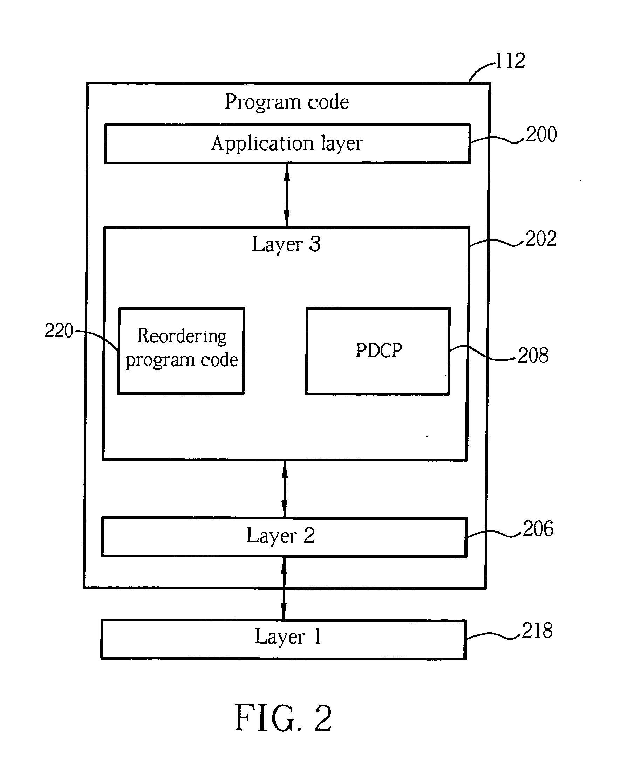

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 3 202 comprises a PDCP layer 208. The Layer 2 206 comprises an RLC layer and a MAC layer, and performs link control. The Layer 1 218 performs physical connections. Note that, although the PDCP layer 208 is contained in the block of Layer 3 202 in Fig. 1, it could also be seen as contained in the block of Layer 2 206. Whether the PDCP layer 208 is considered to belong to Layer 2 or Layer 3 is not relevant to this invention.

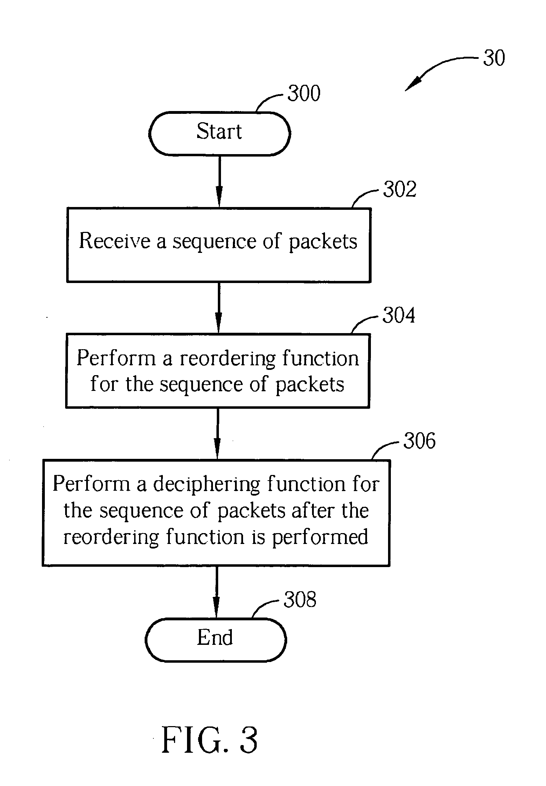

In order to recover packet data, the PDCP layer 208 can perform reordering, so as to process packets in sequence. In such a situation, the embodiment of the present invention provides a reordering program code 220, for accurately performing reordering. Please refer to Fig. 3, which illustrates a schematic diagram of a process 30. The process 30 is used for performing reordering in a PDCP layer of a wireless communications system, and can be compiled into the reordering program code 220. The process 30 comprises the following steps:
- Step 300:: Start.
- Step 302:: Receive a sequence of packets.
- Step 304:: Perform a reordering function for the sequence of packets.
- Step 306:: Perform a deciphering function for the sequence of packets after the reordering function is performed.
- Step 308:: End.

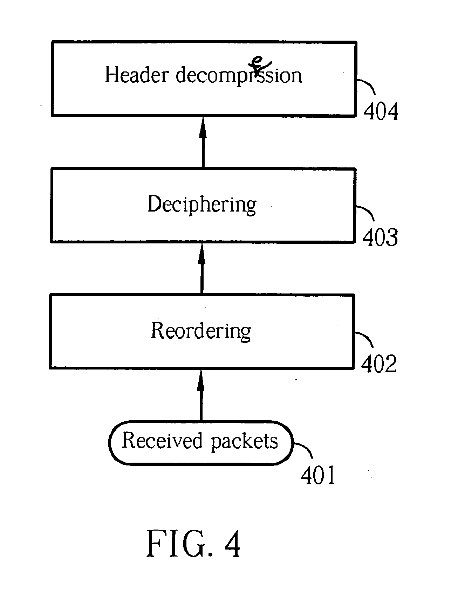

According to the process 30, before the PDCP layer performs deciphering for the received packets, the embodiment of the present invention performs reordering for the received packets first. In other words, the embodiment of the present invention performs reordering for the received packets first, and then performs deciphering. Preferably, reordering is performed based on PDCP SNs of the received packets. Besides, after performing deciphering, the embodiment of the present invention can further perform header decompression. In such a situation, the sequence of processing the received packets in the PDCP layer is shown in Fig. 4.

In Fig. 4, arrows represent processing sequences, so that after the PDCP layer receives packets (401), the embodiment of the present invention performs reordering (402) first, then deciphering (403), and header decompression (404) at last. As a result, deciphering (403) and header decompression (404) can be accurately performed.

As mentioned above, the PDCP layer deciphers packets according to ciphering SNs, which is composed of HFN and SN. HFN is similar to a carrying number of SN. If packets do not arrive the receiver in the order of their SNs, HFN may be wrongly accumulated leading to HFN out of synchronization, causing deciphering failure. In such a case, after the PDCP layer receives packets, the embodiment of the present invention performs reordering first, and then performs deciphering. Therefore, before the PDCP layer performs deciphering, the present invention can ensure that the order of packets is the same as the order of generating the packets, so as to prevent deciphering failure.

In summary, the embodiment of the present invention performs reordering before the PDCP layer performs deciphering for the received packets, so as to prevent deciphering failure, and enhance transmission efficiency.

## Claims

1. A method for handling reordering in a Packet Data Convergence Protocol layer of a wireless communications system comprising:
receiving a sequence of packets (302);
**characterized by** performing a reordering function for the sequence of packets (304); and
performing a deciphering function for the sequence of packets after the reordering function is performed (306).

2. The method of claim 1, **characterized in that** the reordering function is performed based on Packet Data Convergence Protocol sequence numbers of the sequence of packets.

3. The method of claim 1 further **characterized by** comprising performing a function of header decompression for the sequence of packets after the deciphering function is performed.

4. A communications device (100) for accurately performing reordering in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
receiving a sequence of packets by a Packet Data Convergence Protocol entity of the communications device (302);
and is **characterized by** comprising:
performing a reordering function for the sequence of packets by the Packet Data Convergence Protocol entity (304); and
performing a deciphering function for the sequence of packets by the Packet Data Convergence Protocol entity after the reordering function is performed (306).

5. The communications device of claim 4, **characterized in that** the reordering function is performed based on Packet Data Convergence Protocol sequence numbers of the sequence of packets.

6. The communications device of claim 4, **characterized in that** the program code further comprises performing a function of header decompression for the sequence of packets by the Packet Data Convergence Protocol entity after the deciphering function is performed.
